# EUROPÄISCHE PATENTSCHRIFT

(11) **EP 0 815 265 B1**
(45) Veröffentlichungstag und Bekanntmachung des Hinweises auf die Patenterteilung: **06.12.2000**
(21) Anmeldenummer: 96903829.8
(22) Anmeldetag: 11.03.1996
(51) Int. Cl.: C21B 13/00

(54) **VERFAHREN ZUR REDUKTION VON FEINERZ SOWIE ANLAGE ZUR DURCHFÜHRUNG DES VERFAHRENS**
PROCESS FOR REDUCING ORE FINES AND ARRANGEMENT FOR CARRYING OUT THE PROCESS
PROCEDE DE REDUCTION DE FINES DE MINERAI ET UNITE PERMETTANT DE METTRE EN OEUVRE LEDIT PROCEDE

(30) Priorität: 17.03.1995 AT 47795
(43) Veröffentlichungstag der Anmeldung: 07.01.1998
(73) Patentinhaber: VOEST-ALPINE INDUSTRIEANLAGENBAU GMBH, 4020 Linz (AT); POHANG IRON & STEEL CO., LTD., Pohang City, Kyong Sang Book-Do 790-300 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: KEPPLINGER, Leopold, Werner, A-4060 Leonding (AT); WALLNER, Felix, A-4020 Linz (AT); SCHENK, Johannes-Leopold, A-4040 Linz (AT); GENNARI, Udo, A-4020 Linz (AT); LEE, Il-Ock, Pohang 790-390 (KR); KIM, Yong-Ha, Pohang 790-390 (KR); PARK, Dae-Gyu, Pohang 790-390 (KR)
(74) Vertreter: Kopecky, Helmut, Dipl.-Ing. Kopecky & Schwarz Patentanwälte
(86) Internationale Anmeldenummer: AT9600045
(87) Internationale Veröffentlichungsnummer: WO9629435

(56) Entgegenhaltungen:
- FR-A- 1 069 849
- US-A- 2 733 137
- US-A- 2 789 034
- DATABASE WPI Derwent Publications Ltd., London, GB; AN 96-185192 c19 XP002004711 "fluidized bed furnace for reduction of ore" & JP,A,08 060 215 (KAWASAKI HEAVY IND) , 5.März 1996
- PATENT ABSTRACTS OF JAPAN vol. 12, no. 213 (C-505), 17.Juni 1988 & JP,A,63 011611 (NIPPON STEEL CORP), 19.Januar 1988,
- PATENT ABSTRACTS OF JAPAN vol. 13, no. 472 (C-647), 25.Oktober 1989 & JP,A,01 184211 (NIPPON STEEL CORP), 21.Juli 1989,
- PATENT ABSTRACTS OF JAPAN vol. 12, no. 213 (C-505), 17.Juni 1988 & JP,A,63 011609 (NIPPON STEEL CORP), 19.Januar 1988,
- PATENT ABSTRACTS OF JAPAN vol. 18, no. 215 (C-1191), 18.April 1994 & JP,A,06 010021 (KAWASAKI STEEL CORP), 18.Januar 1994, in der Anmeldung erwähnt
- PATENT ABSTRACTS OF JAPAN vol. 12, no. 398 (C-538), 21.Oktober 1988 & JP,A,63 140020 (NIPPON STEEL CORP), 11.Juni 1988,
- PATENT ABSTRACTS OF JAPAN vol. 13, no. 414 (C-635), 13.September 1989 & JP,A,01 152211 (KAWASAKI HEAVY IND), 14.Juni 1989,
- PATENT ABSTRACTS OF JAPAN vol. 13, no. 379 (C-628), 22.August 1989 & JP,A,01 129915 (KAWASAKI HEAVY IND), 23.Mai 1989,

## Beschreibung

Die Erfindung betrifft ein Verfahren zur Reduktion von Feinerz mit Reduktionsgas im Wirbelschichtverfahren sowie eine Anlage zur Durchführung des Verfahrens.

Bei der Reduktion von Erzen ist es oftmals erforderlich, Feinerze mit einem breiten Korngrößenbereich, beispielsweise mit einem Korngrößenbereich von Staubform bis zu 8 mm, einzusetzen. Hierbei verursachen die Feinstanteile Schwierigkeiten, da diese oftmals mit dem verbrauchten bzw. teilweise verbrauchten Reduktionsgas ausgetragen werden und zur Vermeidung von Verlusten dann von diesem abgetrennt und wiederum in das Reduktionsverfahren rückgeschleust werden müssen.

Zur Abhilfe dieser Schwierigkeiten ist es bekannt, das Feinerz mit Hilfe des Reduktionsgases durch Windsichten in zwei Fraktionen mit jeweils unterschiedlichen Korngrößenverteilungen zu trennen und diese beiden Fraktionen getrennt voneinander weitgehend fertig zu reduzieren. Vorteilhaft ist es, wie aus der JP-A - 6-10021 bekannt, wenn die beiden Wirbelschichten direkt übereinander bestehen, wodurch sich kurze Gas- und Materialströme ergeben. Gemäß der JP-A - 6-10021 kommt es in einem ersten Reaktorbehälter, in dem eine erste Wirbelschicht gebildet ist, zum Mitreißen der Feinteile des eingesetzten Erzes durch das Reduktionsgas. Das den ersten Reaktorbehälter verlassende Reduktionsgas wird in einen zweiten, direkt auf dem ersten Reaktorbehälter angeordneten Reaktorbehälter eingeleitet und dort unter Bildung einer weiteren Wirbelschicht entspannt, u.zw. dadurch, daß dieser zweite Reaktorbehälter einen größeren Querschnitt als der erste Reaktorbehälter aufweist. Aus jeder der beiden Wirbelschichten wird fertig bzw. weitgehend fertig reduziertes Erz direkt ausgetragen. Eine Zufuhr des Erzes und eine Zufuhr von Reduktionsgas erfolgt nur in den ersten unteren Reaktorbehälter.

Hierbei ist nachteilig, daß die optimale Reduktion jeweils nur für eine der Wirbelschichten durch Zufuhr einer bestimmten Menge des Reduktionsgases mit einer bestimmten chemischen Zusammensetzung eingestellt werden kann. Für die weitere obere Wirbelschicht ergibt sich eine Reduktion in Abhängigkeit der Reduktion des Erzes und damit der Änderung der chemischen Zusammensetzung des Reduktionsgases in der unteren Wirbelschicht. Auch läßt sich hierbei eine optimale Trennung des Erzes in jeweils unterschiedliche Korngrößenverteilungen enthaltende Fraktionen nur schwierig durchführen, da die zugeführte Reduktionsgasmenge in erster Linie in Abhängigkeit der im unteren Reduktionsbehälter vorgesehenen Grobkornfraktion und des für diese gewünschten Metallisierungsgrades eingestellt werden muß, woraus jedoch wiederum ein ganz bestimmter Mengen-Austrag an Feinkornfraktion resultiert, ohne daß es möglich ist, die Reduktion der Feinkornfraktion für sich zu beeinflussen oder zu optimieren.

Weiters ergibt sich hier die Schwierigkeit, daß es zu einem Rückströmen der vom Reduktionsgas abgeschiedenen Feinkornfraktion kommen kann, da an den Wänden des oberen und unteren Reaktorbehälters die Gasgeschwindigkeit gegen Null geht und dort eine Bewegung der Erzteilchen nach unten hin, d.h. zur Wirbelschicht mit gröberen Erzteilchen, stattfindet.

Zur Vermeidung des letztgenannten Nachteiles ist es aus der US-A - 4,975,116 bekannt, zwischen zwei übereinanderliegenden Reaktorbehältern eine Engstelle vorzusehen, an der eine Beschleunigung des Reduktionsgases stattfindet. Hierdurch gelingt es, eine Rückmischung der in den übereinanderliegenden Wirbelschichten vorhandenen Erzteilchen zu verhindern. Gemäß der US-A - 4,975,116 durchsetzt jedoch das gesamte Erz beide Reaktorbehälter, da ein Feststoffaustrag und Gasaustrag lediglich am oberen Ende des oberen Reaktorbehälters vorgesehen ist. Hier ist also keine Windsichtung des Erzes in unterschiedliche Korngrößenverteilungen aufweisende Fraktionen vorgesehen. Dies ist insofern nachteilig, als es hierdurch zu unterschiedlichen Verweilzeiten von Erz unterschiedlicher Korngröße und damit zu unterschiedlichen Metallisierungsgraden kommt. Dieses Verfahren ist daher nicht für Erz mit einem breiten Korngrößenbereich geeignet.

Aus den KR-Patentanmeldungen 92-24265, 91-19779, 92-27502 und 92-24266 ist es bekannt, Erz durch Windsichten mit Hilfe des Reduktionsgases in zwei oder mehrere Fraktionen mit jeweils unterschiedlichen Korngrößenverteilungen zu trennen und diese Fraktionen mit jeweils frisch zugeführtem Reduktionsgas in eigenen Wirbelschichten, die durch das frisch zugeführte Reduktionsgas gebildet werden, zu reduzieren und reduziertes Erz aus jeder der Wirbelschichten auszutragen. Hierbei erfolgt die Weiterführung des Reduktionsgases von einer Wirbelschicht zur nächsten derart, daß das Reduktionsgas gemeinsam mit den vom Reduktionsgas mitgeförderten Feinteilen des Erzes seitlich in den nächsten Reaktorbehälter einmündet, wodurch Störungen bei der Wirbelschichtbildung verursacht werden.

Weiters gelingt es hierdurch nicht mehr, das weitergeförderte Reduktionsgas, dem noch ein Reduktionspotential innewohnt, in den in der nächsten Wirbelschicht stattfindenden Reduktionsprozeß einzuhinden; die nächste Wirbelschicht wird vielmehr allein von frisch und direkt zugeführtem Reduktionsgas gebildet, so daß sich bei diesem bekannten Verfahren ein sehr hoher Reduktionsgasverbrauch einstellt und damit hohe Kosten ergeben. Weiters fällt Reduktionsgas in großer Menge mit noch erheblichem Reduktionspotential an, das entweder als Verlust zu verbuchen ist oder anderwertig eingesetzt werden muß.

Die Erfindung bezweckt die Vermeidung dieser Nachteile und Schwierigkeiten und stellt sich die Aufgabe, ein Verfahren der eingangs beschriebenen Art und eine Anlage zur Durchführung des Verfahrens zu schaffen, welche auch bei einem Erz mit einem breiten Komgrößenbereich einen einheitlichen und gleichmäßigen Metallisierungsgrad ermöglichen. Insbesondere soll es hierbei zu einer optimalen Ausnutzung des Reduktionsgases kommen, wobei die Menge des eingesetzten Reduktionsgases minimiert werden kann.

Erfindungsgemäß wird diese Aufgabe dadurch gelöst:
- daß das Feinerz mit Hilfe des Reduktionsgases in mindestens zwei Fraktionen mit jeweils unterschiedlichen Korngrößenverteilungen, nämlich in mindestens eine Grobkornfraktion und mindestens eine Feinkornfraktion, fraktioniert wird,
- daß jede Fraktion in einer eigenen Wirbelschicht mit dem Reduktionsgas reduziert wird, wobei
- das Reduktionsgas eine erste, die Grobkornfraktion enthaltende Wirbelschicht aufrecht erhält und aus dieser die Feinkornfraktion abscheidet, gemeinsam mit der Feinkomfraktion beschleunigt wird, anschließend unter Entspannung eine weitere Wirbelschicht bildet, in die es fortlaufend radialsymmetrisch und von unten eingeleitet wird, und wobei weiters
- in die weitere Wirbelschicht zusätzlich Sekundär-Reduktionsgas radialsymmetrisch direkt eingeleitet wird, u.zw. in einer eine Reduktion der Feinkomfraktion in dieser Wirbelschicht auf einen vorbestimmten Metallisierungsgrad innerhalb einer vorgegebenen Zeitspanne sichernden Menge bzw. chemischen Zusammensetzung, und
- daß reduziertes Erz sowohl aus der ersten und der weiteren Wirbelschicht ausgetragen wird.

Zur Minimierung der für die Reduktion erforderlichen Reduktionsgasmenge wird vorteilhaft die Korngrößenverteilung der abgeschiedenen Feinkornfraktion in Abhängigkeit der Gesamtkorngrößenverteilung durch Einstellung der pro Zeiteinheit in die erste Wirbelschicht zugeführten Reduktionsgasmenge eingestellt und gleichzeitig der Reduktionsgrad der Feinkornfraktion durch Einstellen der dieser Fraktion zusätzlich direkt zugeführten Menge an Sekundär-Reduktionsgas eingestellt.

Eine Anlage zur Durchführung des Verfahrens hat nachstehende Merkmale :
- einen ersten Reaktorbehälter zur Aufnahme einer ersten Wirbelschicht, der mit einer Feinerzzuführungsleitung, einer radialsymmetrisch angeordneten Reduktionsgaszuleitung, einer Austrageinrichtung für reduziertes Erz und einer verbrauchtes bzw. teilweise verbrauchtes Reduktionsgas ableitenden Gasaustragseinrichtung,
- mindestens einen weiteren Reaktorbehälter zur Aufnahme einer weiteren Wirbelschicht, der mit mindestens einer radialsymmetrisch im Bodenbereich dieses Reaktorbehälters angeordneten Zuführöffnung für Feinerz und Reduktionsgas, einer verbrauchtes Reduktionsgas abführenden Leitung und mit einer Austrageinrichtung für in dieser weiteren Wirbelschicht reduziertes Erz versehen ist, wobei
- zwischen der Gasaustragseinrichtung des ersten Reaktorbehälters und der Zuführöffnung für Feinerz und Reduktionsgas des zweiten Reaktorbehälters eine düsenartige, eine Beschleunigung des Reduktionsgases bewirkende Verengung vorgesehen ist, und
- der weitere Reaktorbehälter mit einer radialsymmetrisch angeordneten Sekundär-Reduktionsgaszuführeinrichtung, wie einem Gasverteilerboden, ausgetattet ist, die im Bodenbereich des in diesem Reaktorbehälter gebildeten Wirbelbettes vorgesehen ist.

Gemäß einer bevorzugten Ausführungsform ist der weitere Reaktorbehälter direkt oberhalb des ersten Reaktorbehälters angeordnet und weist einen gegenüber dem ersten Reaktorbehälter erweiterten Querschnitt auf. Dies ergibt eine konstruktiv einfache und platzsparende Anlage, bei der kurze Gas- und Materialströme gewährleistet sind.

Eine weitere bevorzugte Ausführungsform ist dadurch gekennzeichnet, daß der weitere Reaktorbehälter sich mit einer kreisringförmigen radial nach außen gerichteten Erweiterung über den Querschnitt des ersten Reaktorbehälters erstreckt, und daß in dieser Erweiterung ein Gasverteilerboden zur Zuführung des Sekundärreduktionsgases vorgesehen ist.

Zur Optimierung des Gasverbrauches und des Metallisierungsgrades sind zweckmäßig die Gaszuführungsleitung zum ersten Reaktorbehälter und die Sekundär-Reduktionsgaszuführungseinrichtung zum weiteren Reaktorbehälter mit Mengen-Regelventilen ausgestattet.

Um einen Austrag von Feinerzteilchen aus der die Feinkornfraktion enthaltenden Wirbelschicht zu minimieren, ist zweckmäßig der weitere Reaktorbehälter bei seinem oberen Bereich mit einer einen Gasberuhigungsraum bildenden radial nach außen auskragenden, die Querschnittsfläche vergrößernden Aufweitung versehen.

Zur Rückförderung größerer Feinerzteilchen bzw. Erzagglomerate geht zweckmäßig die Gasaustragseinrichtung zumindest mit einem vertikal ausgerichteten Bereich vom ersten Reaktorbehälter aus und weist vorteilhaft der weitere Reaktorbehälter einen schrägen, zur Zuführöffnung für Feinerz und Reduktionsgas hin abfallenden Boden auf.

Zweckmäßig ist in der Reduktionsgas abführenden Leitung eine Staubabscheidung, vorzugsweise ein Zyklon, installiert und weist die Anlage eine Staubrückführleitung auf.

Eine einfach herzustellende Ausführungsform ist dadurch gekennzeichnet, daß der weitere Reaktorbehälter zylindrisch ausgeführt ist.

Für einen minimalen Staubaustrag ist vorteilhaft der weitere Reaktorbehälter nach oben konisch erweitert ausgebildet.

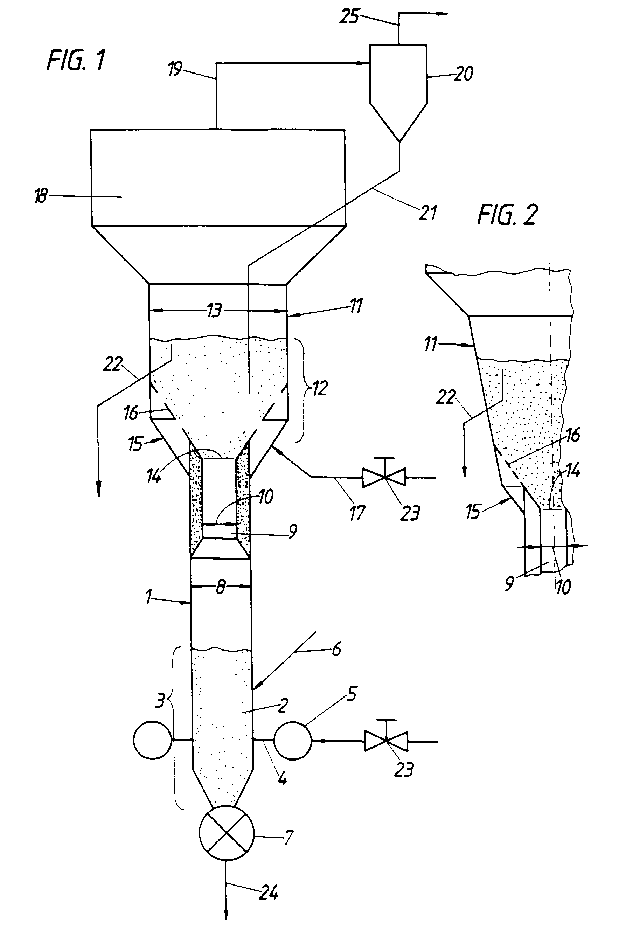

Die Erfindung ist nachstehend anhand in der Zeichnung dargestellter Ausführungsbeispiele näher erläutert, wobei die Fig. 1 und 2 jeweils einen axial geführten Längsschnitt durch eine erfindungsgemäße Anlage in schematischer Darstellung nach jeweils einer Ausführungsform zeigen.

Eine Anlage zur Durchführung des erfindungsgemäßen Verfahrens weist einen ersten Reaktorbehälter 1 zur Aufnahme einer ersten, aus Erz 2 gebildeten Wirbelschicht 3 auf. Das die Wirbelschicht 3 aufrecht erhaltende Reduktionsgas wird über eine Reduktionsgaszuleitung 4 ausgehend von einer den Reaktorbehälter 1 umgebenden Ringleitung 5 radialsymmetrisch zugeführt. Zur Zuleitung des Feinerzes dient eine Feinerzzuführungsleitung 6, die seitlich in den Reaktorbehälter 1 einmündet.

Am unteren Ende des sich kegelstumpfförmig verengenden Reaktorbehälters 1 ist eine Austrageinrichtung 7 für reduziertes Erz vorgesehen. Am oberen Ende des zweckmäßig einen kreisförmigen Querschnitt 8 aufweisenden ersten Reaktorbehälters 1 ist im Abstand oberhalb der Wirbelschicht 3 eine etwa vertikal ausgerichtete Gasaustragseinrichtung 9 vorgesehen, die einen gegenüber dem Reaktorquerschnitt 8 verengten Querschnitt 10, vorzugsweise ebenfalls kreisförmigen Querschnitt 10, aufweist. Die Gasaustragseinrichtung 9 bildet somit eine düsenartige Verengung. Die vertikale Anordnung der Gasaustragseinrichtung 9 ermöglicht eine Rückförderung von zufällig durch das aufwärts strömende Reduktionsgas mitgerissenen größeren Erzteilchen oder sich während des Reduzierens bildenden Agglomeraten in die Wirbelschicht 3.

Unmittelbar ober dem ersten Reaktorbehälter 1 ist ein weiterer Reaktorbehälter 11 zur Aufnahme einer weiteren Wirbelschicht 12 angeordnet. In diesen weiteren Reaktorbehälter 11, der einen gegenüber dem Querschnitt 8 des ersten Reaktorbehälters 1 größeren Kreisquerschnitt 13 aufweist, mündet die Gasaustrageinrichtung 9 des ersten Reaktorbehälters 1 über eine radialsymmetrisch, d.h. hier zentral angeordnete Gas-Zufuhröffnung 14, durch die das aus dem ersten Reaktorbehälter 1 austretende Reduktionsgas, welches einen Teil des Feinerzes, nämlich den mit einer Korngröße im unteren Bereich der Korngrößenverteilung, mitreißt, in die Wirbelschicht 12 eintritt und diese aufrecht erhält. Das untere Ende des zweiten Reaktorbehälters 11 ist ebenfalls kegelstumpfförmig ausgebildet, wobei der weitere Reaktorbehälter 11 gegenüber dem ersten Reaktorbehälter 1 kreisringförmig radial auskragt, also mit einer kreisringförmig sich nach außen erstreckenden Erweiterung 15 versehen ist.

An dieser Erweiterung 15 weist der weitere Reaktorbehälter 11 einen radialsymmetrisch angeordneten Gasverteilerboden 16 zur direkten Zuführung eines über eine Gaszuleitung 17 zuströmenden Sekundär-Reduktionsgases auf, das dann zusätzlich mit dem aus dem ersten Reaktorbehälter 1 zuströmenden Reduktionsgas nicht nur für die Aufrechterhaltung des Wirbelbettes 12 in dem weiteren Reaktorbehälter 11, sondern auch für eine hinreichende Reduktion des in dieser Wirbelschicht 12 vorhandenen Feinerzes 2 sorgt. Hierbei wird das Rest-Reduktionspotential des aus dem ersten Reaktorbehälter 1 ausströmenden Reduktionsgases ausgenutzt. Der Gasverteilerboden 16, der als Lochboden, Siebboden, Ventilboden oder Glockenboden od.dgl. ausgebildet sein kann, ist zur zentral angeordneten Gaszuführungsöffnung 14 hin abfallend (etwa kegelstumpfförmig) ausgebildet, so daß größere Erzteilchen oder Agglomerate aus solchen wieder in das Wirbelbett 3 im ersten Reaktorbehälter 1 zurückfallen.

Am oberen Ende des weiteren Reaktorbehälters 11 ist dieser mit einer ebenfalls radial nach außen gerichteten, d.h. nach außen auskragenden Aufweitung 18 versehen, wodurch im Abstand oberhalb der Wirbelschicht 12 die Gasgeschwindigkeit stark absinkt, z.B. auf etwa die Hälfte der Geschwindigkeit innerhalb der Wirbelschicht 12, was eine drastische Reduzierung des Staubaustrages mit dem oben über die Ableitung 19 abgeführten verbrauchten Reduktionsgas bewirkt. Das verbrauchte Reduktionsgas wird in einem Zyklon 20 gereinigt, von dem die dabei abgeschiedenen Feinteilchen über eine Rückleitung 21 wiederum in die Wirbelschicht 12 des weiteren Reaktorbehälters 11 eingeleitet werden. Der weitere Reaktorbehälter 11 ist mit einer eigenen Austrageinrichtung 22 des in ihm reduzierten Feinerzes versehen.

Erfindungsgemäß erfolgt in der Anlage eine Trennung des eingesetzten Feinerzes 2, das einen breiten Komgrößenbereich aufweist (beispielsweise in der Größenordnung von 0,.. bis 8 mm) durch Windsichten mit Hilfe des Reduktionsgases in eine Grobkornfraktion und in eine Feinkornfraktion, also in Fraktionen mit unterschiedlichen Korngrößenverteilungen. Hierdurch gelingt es, die Strömungsverhältnisse für die Fluidisierung und die Verweilzeit des Erzes optimal an den Kornbrand anzupassen.

Feine Teilchen, die aus dem ersten unteren Reaktorbehälter 1 ausgetragen werden, werden infolge der düsenartigen Verengung 9 am Rückfließen in diesen Reaktorbehälter 1 gehindert, da sie durch das durch die Verengung 9 mit erhöhter Geschwindigkeit aufwärts strömende Reduktionsgas wiederum nach oben mitgerissen werden. Durch in den Reduktionsgaszuleitungen 5 und 17 vorgesehene Mengenregelorgane 23 gelingt es, für jede der Fraktionen, also für jede der Wirbelschichten 3 und 12, eine optimale Gasströmung und damit eine optimale Verweilzeit der Erzteilchen im Reduktionsgas sicherzustellen. Damit gelingt es, genau einen vorbestimmten Metallisierungsgrad des Feinerzes, u.zw. sowohl der Feinkorn- als auch der Grobkornfraktion bei geringstmöglichem Reduktionsgasverbrauch, einzustellen, u.zw. innerhalb einer vorgegebenen Zeitspanne.

Das reduzierte und mit der Austrageinrichtung 7 aus dem ersten Reaktorbehälter 1 ausgetragene Erz wird über eine Feststoffaustragsleitung 24 weitergefördert. Über die an den Zyklon 20 angeschlossene Leitung 25 erfolgt ein Abzug des gereinigten Gases zusammen mit dem in diesem abgezogenen Gas enthaltenen Reststaub.

Fig. 2 zeigt eine Variante des weiteren Reaktorbehälters 11, der anstelle der in Fig. 1 dargestellten zylindrischen Ausbildung sich nach oben konisch erweiternd gestaltet ist.

Das erfindungsgemäße Verfahren ist anhand des nachstehenden Ausführungsbeispieles näher beschrieben:

In den ersten Reaktorbehälter 1 wird Feinerz 2 mit einer Rohdichte von 3.900 kg/m³ eingebracht. Dieses Feinerz weist eine Korngrößenverteilung gemäß nachstehender Tabelle auf.
Korngrößenverteilung:
- 4 mm 100 %
- 2 mm 65 %
- 1 mm 50 %
- 0,5 mm 38 %
- 0,125 mm 22 %
- 0,063 mm 8 %

Eingebracht wird dieses Feinerz 2 mit einem Fluidisierungsmedium, u.zw. Reduktionsgas mit 800°C und 4,5 bar abs.. Der Feststoffeinsatz beträgt 115 kg/h. Der Austrag an teilreduziertem Erz aus dem ersten Reaktorbehälter 1 beträgt 64 kg/h, der Austrag an teilreduziertem Erz aus dem weiteren Reaktorbehälter 11 36 kg/h. Der Staubverlust beträgt 2 kg/h.

Der Reaktorbehälter 1 der Anlage weist einen Durchmesser von 126 mm und eine Höhe von 1,5 m auf. Der vertikal darüber liegende weitere Reaktorbehälter 11 hat einen Durchmesser von 295 mm und eine Höhe von ebenfalls 1,5 m. In diesen Reaktorbehältern 1 und 11 wird eine Gasgeschwindigkeit (Leerrohrgeschwindigkeit) von 2,22 m/s im ersten Reaktorbehälter 1 und von 0,64 m/s im weiteren Reaktorbehälter 11 erzielt. In der zwischen den beiden Reaktorbehältern 1 und 11 vorgesehenen düsenartigen Verengung 9 beträgt die Gasgeschwindigkeit 5 m/s.

Die Korngrößenverteilung beim Erzaustrag ist in nachstehender Tabelle wiedergegeben:
Korngrößenverteilung: Austrag - erster Reaktorbehälter 1
- 4 mm 100 %
- 2 mm 60 %
- 1 mm 40 %
- 0,125 mm 10 %
- 0,063 mm 2 %
Korngrößenverteilung: Austrag - weiterer Reaktorbehälter 11
- 1 mm 100 %
- 0,125 mm 53 %
- 0,063 mm 9 %

Reduktionsgas wird dem ersten Reaktorbheälter 1 in einer Menge von 87 Nm³/h und dem weiteren Reaktorbehälter 11 in einer Menge von 50 Nm³/h zugeleitet.

Die chemische Zusammensetzung des Reduktionsgases ist nachfolgend angegeben:
Frisches Gas:
55 % CO
15 % CO₂
20 % H₂
5 % H₂O
5 % N₂
verbrauchtes Gas:
46,2 % CO
23,8 % CO₂
15,5 % H₂
9,5 % H₂O
5 % N₂

Der Reduktionsgrad des Feinerzes beträgt einheitlich 40 %.

Nachfolgend ist ein weiteres Ausführungsbeispiel beschrieben:

In den ersten Reaktorbehälter 1 wird vorreduziertes Feinerz 2 mit einer Rohdichte von 3450 kg/m³ und einem Reduktionsgrad von 40 % eingebracht. Dieses Feinerz weist eine Korngrößenverteilung gemäß nachstehender Tabelle auf.
Korngrößenverteilung:
- 4 mm 100 %
- 2 mm 74,5 %
- 1 mm 61,5 %
- 0,125 mm 25,5 %
- 0,063 mm 4,5 %

Eingebracht wird dieses Feinerz 2 mit einem Fluidisierungsmedium, u.zw. Reduktionsgas mit 850°C und 4,7 bar abs.. Der Feststoffeinsatz beträgt 100 kg/h. Der Austrag am ersten Reaktorbehälter 1 beträgt 52 kg/h, der Austrag am weiteren Reaktorbehälter 11 30 kg/h. Der Staubverlust beträgt 1,2 kg/h.

Der erste Reaktorbehälter 1 der Anlage weist einen Durchmesser von 126 mm und eine Höhe von 1,5 m auf. Der vertikal darüber liegende weitere Reaktorbehälter 11 hat einen Durchmesser von 295 mm und eine Höhe von 1,5 m. In diesen Reaktorbehältern 1 und 11 wird eine Gasgeschwindigkeit (Leerrohrgeschwindigkeit) von 2,22 m/s im ersten Reaktorbehälter 1 und von 0,64 m/s im weiteren Reaktorbehälter 11 erzielt. In der zwischen den beiden Reaktorbehältern 1 und 11 vorgesehenen düsenartigen Verengung 9 beträgt die Gasgeschwindigkeit 5 m/s.

Die Korngrößenverteilung beim Erzaustrag ist in nachstehender Tabelle wiedergegeben:
Korngrößenverteilung: Austrag - erster Reaktorbehälter 1
- 4 mm 100 %
- 2 mm 85 %
- 1 mm 67 %
- 0,125 mm 11 %
- 0,063 mm 1 %
Korngrößenverteilung: Austrag - weiterer Reaktorbehälter 11
- 1 mm 100 %
- 0,125 mm 54 %
- 0,063 mm 10 %

Reduktionsgas wird dem ersten Reaktorbheälter 1 in einer Menge von 87 Nm³/h und dem weiteren Reaktorbehälter 11 in einer Menge von 50 Nm³/h zugeleitet.

Die chemische Zusammensetzung des Reduktionsgases ist nachfolgend angegeben:
Frisches Gas:
65 % CO
4 % CO₂
25 % H₂
1 % H₂O
5 % N₂
verbrauchtes Gas:
53,7 % CO
15,3 % CO₂
19,3 % H₂
6,7 % H₂O
5 % N₂

Der Reduktionsgrad des Feinerzes beträgt einheitlich 93 %.

Kommt es bei herkömmlichen Reduktionsverfahren, wie sie in der Beschreibungseinleitung erwähnt sind, zu einer Änderung der Korngrößenverteilung des eingesetzten Feinerzes 2, ergibt sich eine mengenmäßige Verschiebung des Anteiles der Grobkornfraktion und der Feinkornfraktion. Erfindungsgemäß kann hier in besonders einfacher Weise gegengesteuert werden. Steigt beispielsweise der Anteil der Grobkornfraktion im unteren ersten Reaktorbehälter 1, so erfordert dies zwangsweise eine Erhöhung der Menge des eingesetzten Reduktionsgases, um den gewünschten Metallisierungsgrad zu erzielen. Eine Erhöhung der Menge des Reduktionsgases ergibt aber eine Steigerung der Gasgeschwindigkeit, wodurch mengenmäßig ein größerer Teil der Grobkornfraktion des ersten Reaktorbehälters 1 mit dem Reduktionsgas mitgerissen und in den weiteren Reaktorbehälter 11 gefördert wird. Hierdurch kommt es wiederum zu einem Gleichtgewichtszustand.

Fällt der mengenmäßige Anteil an Grobkornfraktion (beispielsweise auf unter 50 %), so ist zu beachten, daß die Menge des zugeführten Reduktionsgases nicht beliebig abgesenkt werden kann, da es andernfalls zu einer unzulässigen Absenkung der Reduktionsgasgeschwindigkeit und damit zu einem Zusammenfallen der Wirbelschicht 3 kommt. Eine gewisse Absenkung des Grobkornanteiles führt jedoch zu keinerlei Störungen, da das im ersten Reaktorbehälter 1 wegen des geringeren Anteiles der Grobkornfraktion nicht zur Gänze ausgewertete Reduktionsgas sein noch vorhandenes Reduktionspotential, d.h. seinen CO-Anteil, im weiteren Reaktorbehälter an die Feinkornfraktion abgibt. In diesem Fall kann dann das in diesem weiteren Reaktorbehälter 11 zugeführte Sekundär-Reduktionsgas mengenmäßig reduziert werden.

Die Erfindung beschränkt sich nicht auf das in der Zeichnung und Beschreibung dargelegte Ausführungsbeispiel, sondern sie kann in verschiedener Hinsicht modifiziert werden. Beispielsweise ist es möglich, auch mehr als zwei Reaktorbehälter, die jeweils Wirbelschichten unterschiedlicher Korngrößenfraktionen enthalten, vorzusehen. Auch in diesem Fall ist in jeder der Wirbelschichten separat und unabhängig von den anderen Wirbelschichten Reduktionsgas direkt einzuleiten, um jeweils eine weitgehende Fertigreduktion des in der jeweiligen Wirbelschicht enthaltenen Feinerzanteiles zu erzielen.

## Patentansprüche

1. Verfahren zur Reduktion von Feinerz mit Reduktionsgas im Wirbelschichtverfahren, wobei
• das Feinerz (2) mit Hilfe des Reduktionsgases in mindestens zwei Fraktionen mit jeweils unterschiedlichen Korngrößenverteilungen, nämlich in mindestens eine Grobkornfraktion und mindestens eine Feinkornfraktion, fraktioniert wird,
• jede Fraktion in einer eigenen Wirbelschicht (3, 12) mit dem Reduktionsgas reduziert wird,
• das Reduktionsgas eine erste, die Grobkornfraktion enthaltende Wirbelschicht (3) aufrecht erhält und aus dieser die Feinkornfraktion abscheidet, gemeinsam mit der Feinkornfraktion beschleunigt wird, anschließend unter Entspannung eine weitere Wirbelschicht (12) bildet, in die es fortlaufend radialsymmetrisch und von unten eingeleitet wird, und wobei weiters
• in die weitere Wirbelschicht (12) zusätzlich Sekundär-Reduktionsgas radialsymmetrisch direkt eingeleitet wird, u.zw. in einer eine Reduktion der Feinkornfraktion in dieser Wirbelschicht (12) auf einen vorbestimmten Metallisierungsgrad innerhalb einer vorgegebenen Zeitspanne sichernden Menge bzw. chemischen Zusammensetzung, und
• daß reduziertes Erz sowohl aus der ersten und der weiteren Wirbelschicht (3, 12) ausgetragen wird.

2. Verfahren nach Anspruch 1, dadurch gekennzeichnet, daß die Korngrößenverteilung der abgeschiedenen Feinkornfraktion in Abhängigkeit der Gesamtkorngrößenverteilung durch Einstellung der pro Zeiteinheit in die erste Wirbelschicht (3) zugeführten Reduktionsgasmenge eingestellt wird und gleichzeitig der Reduktionsgrad der Feinkomfraktion durch Einstellen der dieser Fraktion zusätzlich direkt zugeführten Menge an Sekundär-Reduktionsgas eingestellt wird.

3. Anlage zur Durchführung des Verfahrens nach Anspruch 1 oder 2, mit
• einem ersten Reaktorbehälter (1) zur Aufnahme einer ersten Wirbelschicht (3), der mit einer Feinerzzuführungsleitung (6), einer radialsymmetrisch angeordneten Reduktionsgaszuleitung (4), einer Austrageinrichtung (7) für reduziertes Erz und einer verbrauchtes bzw. teilweise verbrauchtes Reduktionsgas ableitenden Gasaustragseinrichtung (9) versehen ist,
• mindestens einem weiteren Reaktorbehälter (11) zur Aufnahme einer weiteren Wirbelschicht (12), der mit mindestens einer radialsymmetrisch im Bodenbereich dieses Reaktorbehälters angeordneten Zuführöffnung (14) für Feinerz (2) und Reduktionsgas, einer verbrauchtes Reduktionsgas abführenden Leitung (19) und mit einer Austrageinrichtung (22) für in dieser weiteren Wirbelschicht (12) reduziertes Erz versehen ist, wobei
• zwischen der Gasaustragseinrichtung (9) des ersten Reaktorbehälters (1) und der Zuführöffnung (14) für Feinerz und Reduktionsgas des zweiten Reaktorbehälters (11) eine düsenartige, eine Beschleunigung des Reduktionsgases bewirkende Verengung (9) vorgesehen ist, und
• der weitere Reaktorbehälter mit einer radialsymmetrisch angeordneten Sekundär-Reduktionsgaszuführeinrichtung (16, 17), wie einem Gasverteilerboden, ausgetattet ist, die im Bodenbereich des in diesem Reaktorbehälter (11) gebildeten Wirbelbettes (12) vorgesehen ist.

4. Anlage nach Anspruch 3, dadurch gekennzeichnet, daß der weitere Reaktorbehälter direkt oberhalb des ersten Reaktorbehälters (1) angeordnet ist und einen gegenüber dem ersten Reaktorbehälter (1) erweiterten Querschnitt (13) aufweist.

5. Anlage nach Anspruch 3 oder 4, dadurch gekennzeichnet, daß der weitere Reaktorbehälter (11) sich mit einer kreisringförmigen radial nach außen gerichteten Erweiterung (15) über den Querschnitt (8) des ersten Reaktorbehälters (1) erstreckt, und daß in dieser Erweiterung (15) ein Gasverteilerboden (16) zur Zuführung des Sekundärreduktionsgases vorgesehen ist.

6. Anlage nach einem oder mehreren der Ansprüche 3 bis 5, dadurch gekennzeichnet, daß die Gaszuführungsleitung (4) zum ersten Reaktorbehälter und die Sekundär-Reduktionsgaszuführungseinrichtung (17) zum weiteren Reaktorbehälter (11) mit Mengen-Regelventilen (23) ausgestattet sind.

7. Anlage nach einem oder mehreren der Ansprüche 3 bis 6, dadurch gekennzeichnet, daß der weitere Reaktorbehälter (11) bei seinem oberen Bereich mit einer einen Gasberuhigungsraum bildenden radial nach außen auskragenden, die Querschnittsfläche vergrößernden Aufweitung (18) versehen ist.

8. Anlage nach einem oder mehreren der Ansprüche 3 bis 7, dadurch gekennzeichnet, daß die Gasaustragseinrichtung (9) zumindest mit einem vertikal ausgerichteten Bereich vom ersten Reaktorbehälter (1) ausgeht.

9. Anlage nach einem oder mehreren der Ansprüche 4 bis 8, dadurch gekennzeichnet, daß der weitere Reaktorbehälter (11) einen schrägen, zur Zuführöffnung (14) für Feinerz und Reduktionsgas hin abfallenden Boden (16) aufweist.

10. Anlage nach einem oder mehreren der Ansprüche 4 bis 9, dadurch gekennzeichnet, daß in der Reduktionsgas abführenden Leitung (19) eine Staubabscheidung, vorzugsweise ein Zyklon (20), installiert ist und eine Staubrückführleitung (21) vorgesehen ist.

11. Anlage nach einem oder mehreren der Ansprüche 4 bis 10, dadurch gekennzeichnet, daß der weitere Reaktorbehälter (11) zylindrisch ausgeführt ist.

12. Anlage nach einem oder mehreren der Ansprüche 4 bis 10, dadurch gekennzeichnet, daß der weitere Reaktorbehälter (11) nach oben konisch erweitert ausgebildet ist.

## Claims

1. A process for the reduction of fine ore by reducing gas in the whirl-bed method, wherein
• the fine ore (2) is fractionated by aid of the reducing gas into at least two fractions having different grain size distributions, i.e., into at least one coarse-grain fraction and at least one fine-grain fraction,
• each fraction is reduced by the reducing gas in a separate whirl layer (3, 12),
• the reducing gas maintains a first whirl layer (3) containing the coarse-grain fraction and separates the fine-grain fraction from the same, is accelerated together with the fine-grain fraction, subsequently under pressure release forms a further whirl layer (12), into which it is continuously injected in a radially symmetrical manner and from below, and wherein, furthermore,
• secondary reducing gas additionally is directly injected into the further whirl layer (12) in a radially symmetrical manner in an amount and/or chemical composition to ensure a reduction of the fine-grain fraction in this whirl layer (12) to a predetemined degree of metallization within a predetermined period of time, and
• reduced ore is discharged from both the first and the further whirl layers (3, 12).

2. A process according to claim 1, characterized in that the grain size distribution of the separated fine-grain fraction is adjusted as a function of the overall grain size distribution by adjusting the amount of reducing gas fed into the first whirl layer (3) per time unit and, at the same time, the degree of reduction of the fine-grain fraction is adjusted by adjusting the amount of secondary reducing gas additionally fed to this fraction directly.

3. An arrangement for carrying out the process according to claim 1 or 2, comprising
• a first reactor vessel (1) for receiving a first whirl layer (3), which comprises a fine-ore supply duct (6), a radially symmetrically arranged reducing-gas feed duct (4), a discharge means (7) for reduced ore and a gas discharge means (9) carrying off spent or partially spent reducing gas,
• at least one further reactor vessel (11) for receiving a further whirl layer (12), which comprises at least one supply opening (14) for fine ore (2) and reducing gas arranged radially symmetrically in the bottom region of this reactor vessel, a duct (19) carrying off spent reducing gas, and a discharge duct (22) for ore reduced in this further whirl layer (12), wherein
• a nozzle-like contraction (9) effecting an acceleration of the reducing gas is provided between the gas discharge means (9) of the first reactor vessel (1) and the supply opening (14) for fine ore and reducing gas of the second reactor vessel (11), and
• the further reactor vessel is equipped with a radially symmetrically arranged secondary-reducing-gas feed means (16, 17), such as a gas distribution bottom, which is provided in the bottom region of the whirl bed (12) formed in this reactor vessel (11).

4. An arrangement according to claim 3, characterized in that the further reactor vessel is arranged directly above the first reactor vessel (1) and has a cross section (13) that is widened relative to the first reactor vessel (1).

5. An arrangement according to claim 3 or 4, characterized in that the further reactor vessel (11) extends beyond the cross section (8) of the first reactor vessel (1) by a circularly ring-shaped enlargement (15) directed radially outwards, and that a gas distribution bottom (16) for feeding the secondary reducing gas is provided in this enlargement (15).

6. An arrangement according to one or several of claims 3 to 5, characterized in that the gas feed duct (4) to the first reactor vessel and the secondary-reducing-gas feed means (17) to the further reactor vessel (11) are provided with volume-controlling valves (23).

7. An arrangement according to one or several of claims 3 to 6, characterized in that the further reactor vessel (11), in its upper region, is provided with a radially outwardly cantilevering expansion (18) increasing the cross-sectional area and forming a gas calm-down space.

8. An arrangement according to one or several of claims 3 to 7, characterized in that the gas discharge means (9) departs from the first reactor vessel (1) by at least one vertically oriented region.

9. An arrangement according to one or several of claims 4 to 8, characterized in that the further reactor vessel (11) has an oblique bottom (16) tapering off towards the supply opening (14) for fine ore and reducing gas.

10. An arrangement according to one or several of claims 4 to 9, characterized in that a dust-separating means, preferably a cyclone (20), is installed, and a dust recycling duct (21) is provided, in the duct (19) carrying off reducing gas.

11. An arrangement according to one or several of claims 4 to 10, characterized in that the further reactor vessel (11) is designed to be cylindrical.

12. An arrangement according to one or several of claims 4 to 10, characterized in that the further reactor vessel (11) is designed to be widened conically upwards.

## Revendications

1. Procédé de réduction de fines de minerai avec du gaz de réduction selon le procédé à couche fluidisée, dans lequel
• les fines de minerai (2) sont fractionnées à l'aide du gaz de réduction en au moins deux fractions de différentes répartitions granulométriques, à savoir en au moins une fraction à granulométrie grossière et en au moins une fraction à granulométrie fine,
• chaque fraction est réduite avec le gaz de réduction dans une couche fluidisée (3, 12) qui lui est propre,
• le gaz de réduction maintient une première couche fluidisée (3) contenant la fraction à granulométrie grossière et élimine de cette dernière la fraction à granulométrie fine, est accéléré en commun avec la fraction à granulométrie fine, et forme ensuite par détente une autre couche fluidisée (12), dans laquelle il est introduit en permanence de façon symétrique radiale et à partir du bas, et
• du gaz de réduction secondaire supplémentaire étant introduit directement de façon symétrique radiale dans l'autre couche fluidisée (12), et ce en une quantité ou une composition chimique assurant dans cette couche fluidisée (12) une réduction de la fraction à granulométrie fine à un degré de métallisation prédéterminé en l'espace d'un laps de temps prédéterminé, et
• le minerai réduit étant évacué aussi bien de la première que de l'autre couche fluidisée (3, 12).

2. Procédé selon la revendication 1, caractérisé en ce que la répartition granulométrique de la fraction à granulométrie fine séparée est réglée en fonction de la répartition granulométrique d'ensemble par la régulation de la quantité de gaz de réduction amenée par unité de temps dans la première couche fluidisée (3), et en ce que le degré de réduction de la fraction à granulométrie fine est réglé simultanément par la régulation de la quantité en gaz de réduction secondaire supplémentaire amenée directement à cette fraction.

3. Unité destinée à la mise en oeuvre du procédé selon la revendication 1 ou 2, comportant
• une première enceinte de réacteur (1) destinée à recevoir une première couche fluidisée (3), laquelle est munie d'une conduite d'amenée (6) de fines de minerai, d'une conduite d'amenée (4) de gaz de réduction disposée de façon symétrique radiale, d'un dispositif d'évacuation (7) pour du minerai réduit, et d'un dispositif d'évacuation (9) pour du gaz de réduction usé ou partiellement usé,
• au moins une autre enceinte de réacteur (11) destinée à recevoir une autre couche fluidisée (12), laquelle est munie d'au moins un orifice d'amenée (14) pour des fines de minerai (2) et du gaz de réduction disposé de façon symétrique radiale dans la zone de fond de cette enceinte de réacteur, d'une conduite d'évacuation (19) de gaz de réduction usé, et d'un dispositif d'évacuation (22) pour du minerai réduit dans cette autre couche fluidisée (12),
• un rétrécissement (9) de type venturi provoquant une accélération du gaz de réduction étant prévu entre le dispositif d'évacuation (9) de gaz de la première enceinte de réacteur (1) et l'orifice d'amenée (14) de fines de minerai et de gaz de réduction de la deuxième enceinte de réacteur (11), et
• l'autre enceinte de réacteur étant munie d'un dispositif d'amenée (16, 17) de gaz de réduction secondaire, tel qu'un fond de répartition de gaz, disposé de façon symétrique radiale, qui est prévu dans la zone de fond de la couche fluidisée (12) formée dans cette enceinte de réacteur (11).

4. Unité selon la revendication 3, caractérisée en ce que l'autre enceinte de réacteur est disposée directement au-dessus de la première enceinte de réacteur (1), et en ce que sa section transversale (13) est élargie par rapport à celle de la première enceinte de réacteur (1).

5. Unité selon la revendication 3 ou 4, caractérisée en ce que l'autre enceinte de réacteur (11) s'étend au-dessus de la section transversale (8) de la première enceinte de réacteur (1) par un élargissement (15) en forme de couronne orienté radialement vers l'extérieur, et en ce qu'un fond de répartition (16) de gaz est prévu dans cet élargissement (15) pour l'amenée du gaz de réduction secondaire.

6. Unité selon l'une ou plusieurs des revendications 3 à 5, caractérisée en ce que la conduite d'amenée (4) de gaz vers la première enceinte de réacteur, et le dispositif d'amenée (17) de gaz de réduction secondaire vers l'autre enceinte de réacteur (11), sont munis de vannes de régulation de débit (23).

7. Unité selon l'une ou plusieurs des revendications 3 à 6, caractérisée en ce que l'autre enceinte de réacteur (11) est munie dans sa partie supérieure d'un évasement (18) formant une chambre de stabilisation de gaz, qui fait radialement saillie vers l'extérieur et qui agrandit la surface en section transversale.

8. Unité selon l'une ou plusieurs des revendications 3 à 7, caractérisée en ce que le dispositif d'évacuation (9) de gaz part de la première enceinte de réacteur (1), au moins avec une zone orientée verticalement.

9. Unité selon l'une ou plusieurs des revendications 4 à 8, caractérisée en ce que l'autre enceinte de réacteur (11) comporte un fond oblique (16) incliné vers l'orifice d'amenée (14) de fines de minerai et de gaz de réduction.

10. Unité selon l'une ou plusieurs des revendications 4 à 9, caractérisée en ce qu'un dépoussiéreur, de préférence un cyclone (20), est installé dans la conduite d'évacuation (19) de gaz de réduction, et en ce qu'il est prévu une conduite de recyclage (21) de poussière.

11. Unité selon l'une ou plusieurs des revendications 4 à 10, caractérisée en ce que l'autre enceinte de réacteur (11) est réalisée de façon cylindrique.

12. Unité selon l'une ou plusieurs des revendications 4 à 10, caractérisée en ce que l'autre enceinte de réacteur (11) est réalisée en étant élargie de façon conique vers le haut.
